# EUROPÄISCHE PATENTSCHRIFT

(11) **EP 2 000 328 B1**
(45) Veröffentlichungstag und Bekanntmachung des Hinweises auf die Patenterteilung: **07.04.2010**
(21) Anmeldenummer: 08009118.4
(22) Anmeldetag: 16.05.2008
(51) Int. Cl.: B60C 7/12, A01B 29/04

(54) **Gummihohlreifen**
Hollow rubber tyres
Pneus creux en caoutchouc

(30) Priorität: 05.06.2007 DE 102007026281
(43) Veröffentlichungstag der Anmeldung: 10.12.2008
(73) Patentinhaber: Amazonen-Werke H. Dreyer GmbH & Co. KG, 49205 Hasbergen (DE)
(72) Erfinder: Reinke, Wilfried, 26132 Oldenburg (DE); Tiessen, Reimer Uwe, 26135 Oldenburg (DE); Pokriefke, Michael, 27798 Hude (DE)

(56) Entgegenhaltungen:
- DE-A1- 10 215 477
- FR-A- 635 362
- FR-A- 635 363
- GB-A- 285 168
- US-A- 1 635 194

## Beschreibung

Die Erfindung betrifft einen Gummihohlreifen gemäß des Oberbegriffes des Patentanspruches 1.

Ein derartiger Gummihohlreifen ist beispielsweise durch die GB 285 168 bekannt. Dieser Gummihohlreifen weist zwei durch einen Ringschlitz geteilte Teilringe aus einem härteren Material auf. Diese beiden Teilringe sind über einen Form- und Materialschluss mit einem aus einem flexiblen Material bestehenden Rollabschnitt verbunden.

Ein weiterer Gummihohlreifen ist beispielsweise durch den von der Fa. Buco auf den Markt gebrachten Keilringreifen bekannt. Bei diesem Gummihohlreifen bestehen sowohl der Mantel wie auch der Rollabschnitt aus Gummi, also relativ teurem Material. Weiterhin ist der Mantelbereich im Bereich des Tragkörpers relativ weich und kann keine großen axialen Kräfte aufnehmen.

Um die Aufnahme axialer Kräfte bei einem aus Gummi hergestelltem Gummihohlreifen, wobei auch der Mantel aus Gummi besteht, zu ermöglichen, hat man bei einem Gummihohlreifen gemäß der EP 1 033 266 B1 dadurch zu realisieren versucht, dass man im Mantel im Bereich des Tragkörpers Aussparungen vorgesehen hat, in welchem Verstärkungselemente einlegbar sind. Diese als Verstärkungsrippen ausbildeten Elementverlaufen in axialer Richtung und können in axialer Richtung auftretende Kräfte aufnehmen.

Der Erfindung liegt die Aufgabe zugrunde, einen Gummihohlreifen, der einen flexiblen Rollabschnitt sowie einen axiale Kräfte aufnehmenden Mantel aufweist, zu schaffen, der preiswerter als die bisherigen Gummihohlreifen ist.

Diese Aufgabe wird erfindungsgemäß durch die kennzeichnenden Merkmale des Anspruches 1 gelöst.

Infolge dieser Maßnahme wird nur für den Rollabschnitt relativ teures Gummimaterial verwendet, während für den Mantel ein fester und preiswerter Werkstoff, der in der Lage ist, axiale Kräfte aufzunehmen, verwendet. Hiermit ist, jeweils für den Rollabschnitt ein Material mit guten Walk- und Verschleißeigenschaften verwendet, während für den betreffenden Abschnittsbereich des Reifens das geeignete Material verwendet wird, wobei für den Mantelbereich ein steifes und festes und preiswertes Material Verwendung findet. Für jeden Aufgabenbereich wird somit für den Gummihohlreifen das jeweils optimale Material und an die Erfordernisse angepasste Material verwendet.

Eine besonders gute Verzahnung der unterschiedlichen Materialien von Rollabschnitt und Teilringen des Mantels ergibt sich dadurch, dass die Verzahnungsmittel als radial aus den Mantelflächen der Teilringe herausragende kreisförmige Ringelemente sind, dass in den Ringelementen Durchbrüche, Aussparungen, und/oder Erhebungen angeordnet sind.

Anstelle die Teilringe des Mantels aus einem druckfesten Kunststoff herzustellen, können Sie auch als Blechformteil hergestellt sein.

Um einen sicheren Materialschluss zwischen den Teilringen des Mantels und des Rollabschnittes zu erreichen, ist vorgesehen, dass den äußeren Mantelflächen der Teilringe Verzahnungsmittel zugeordnet sind, dass die Flanken der Rollabschnitte material- und/oder formschlüssig mit den Verzahnungsmitteln verbindbar sind.

Eine einfache Ausgestaltung der Verzahnungsmittel lässt sich dadurch erreichen, dass die Verzahnungsmittels als radial aus dem Mantelflächen der Teilringe herausragende Elemente ausgebildet sind.

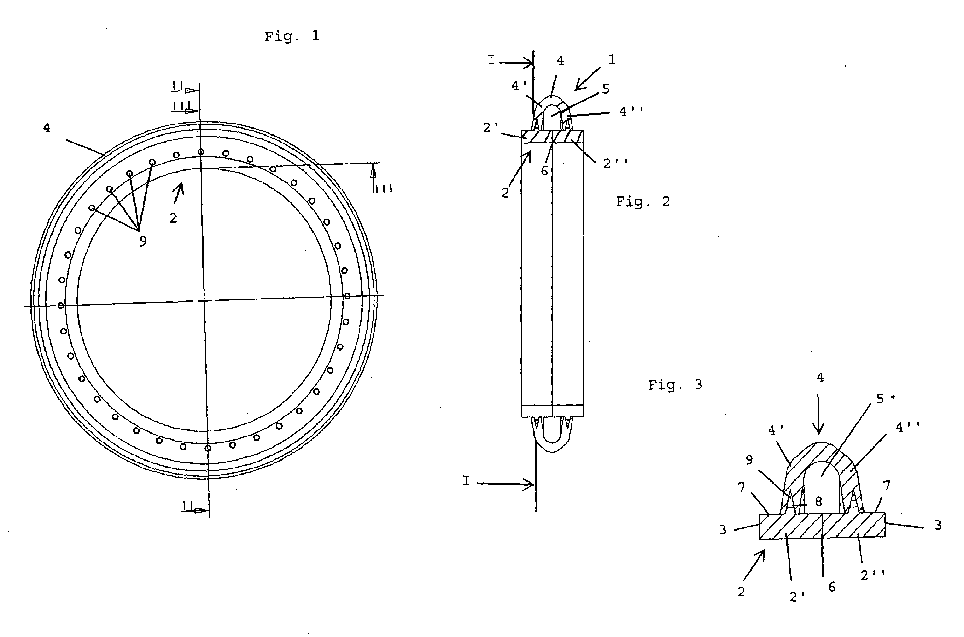

Weitere Einzelheiten der Erfindung sind der Beispielsbeschreibung und den Zeichnungen zu entnehmen. Hierbei zeigen
- Fig. 1: den Gummihohlreifen im Schnitt I-I,
- Fig. 2: den Gummihohlreifen im Schnitt II-II,
- Fig. 3: den Gummihohlreifen im Schnitt III-III im vergrößerten Maßstab.

Der Gummihohlreifen 1 ist zum Anordnen von mehreren Gummihohlreifen 1 nebeneinander auf einem nicht dargestellten und sich quer zur Fahrtrichtung erstreckenden Tragkörper einer Bodenwalze vorgesehen. Der Gummihohlreifen 1 weist einen zentralen Mantel 2 auf, der auf dem Tragkörper aufgeschoben wird. Des Weiteren weist der zentrale Mantel 2, der aus zwei Teilringen 2', 2" besteht, zwei gegenüberliegende Montagebereiche 3 auf, die jeweils mit dem benachbarten Montagbereich 3 des benachbarten Gummihohlreifen 1 zusammenwirken und gegeneinander verspannt werden. Des Weiteren weist der Gummihohlreifen 1 einen Gummirollabschnitt 4 auf. Der Rollabschnitt 4 besteht aus zwei mit dem Mantel 2 verbundenen Flanken 4', 4". Die Flanken und der Mantel umschließen einen Hohlring 5. Wie bereits erwähnt ist der Mantel 2 durch einen radial verlaufenden Ringschlitz 6 in zwei Teilringe 2', 2" geteilt.

## Patentansprüche

1. Gummihohlreifen, der zum Anordnen auf einen Tragkörper geeignet ist und einen zentralen Mantel, der auf dem Tragkörper anordbar ist, mit zwei gegenüberliegenden Montagebereichen sowie einen Rollabschnitt aufweist, wobei der Rollabschnitt mit dem Mantel verbundene Flanken sowie ein von den Flanken und dem Mantel umschlossenen Hohlring aufweist, wobei der Mantel durch einen radial verlaufenden Ringschlitz in zwei Teilringe (2',2") geteilt ist, wobei die Teilringe (2',2") aus einem festeren Material als der aus einem flexibleren Material besehende Rollabschnitt (4) bestehen, wobei die Flanken (4',4") des Rollabschnittes (4) mit den Teilringen (2',2") in form- und/oder materialschlüssiger Weise miteinander verbunden sind, wobei die Verzahnungsmittel (8) als radial aus den Mantelflächen (7) der Teilringe (2',2") herausragende kreisförmige Ringelemente (8) sind, **dadurch gekennzeichnet dass** in den Ringelementen Durchbrüche (9), Aussparungen (9), und/oder Erhebungen angeordnet sind.

2. Gummihohlreifen nach Anspruch 1, **dadurch gekennzeichnet, dass** der Rollabschnitt (4) aus Gummi hergestellt ist.

3. Gummihohlreifen nach Anspruch 1, **dadurch gekennzeichnet, dass** die Teilringe (2',2") aus einem druckfesten Kunststoff hergestellt sind.

4. Gummihohlreifen nach Anspruch 1, **dadurch gekennzeichnet, dass** die Teilringe (2',2") als Blechformmaterial ausgebildet sind.

5. Gummihohlreifen nach einem oder mehreren der vorstehenden Ansprüche, **dadurch gekennzeichnet, dass** den äußeren Mantelflächen (7) der Teilringe (2',2") Verzahnungsmittel (8) zugeordnet sind, dass die Flanken der Rollabschnitte (4) material- und/oder formschlüssig mit den Verzahnungsmitteln (8) verbindbar sind.

## Claims

1. Hollow rubber tyre which is suitable for arranging on a supporting body and has a central outer case, which can be arranged on the supporting body, with two opposing mounting regions, and a rolling portion, wherein the rolling portion has flanks connected to the outer case and a hollow ring enclosing the flanks and the outer case, wherein the outer case is divided by a radially running annular slit into two parts-rings (2, 2"), wherein the part-rings (2', 2") consist of a more firm material than the rolling portion (4), consisting of a more flexible material, wherein the flanks (4', 4") of the rolling portion (4) are connected to the part-rings (2', 2") in a form-fitting and/or material-bonding manner and wherein the interlocking means (8) are circular ring elements (8) protruding radially from the lateral surfaces (7) of the part-rings (2', 2"), **characterized in that** apertures (9), clearances (9) and/or elevations are arranged in the ring elements.

2. Hollow rubber tyre according to Claim 1, **characterized in that** the rolling portion (4) is produced from rubber.

3. Hollow rubber tyre according to Claim 1, **characterized in that** the part-rings (2', 2") are produced from a pressure-resistant plastic.

4. Hollow rubber tyre according to Claim 1, **characterized in that** the part-rings (2', 2") are formed as shaped sheet-metal material.

5. Hollow rubber tyre according to one or more of the preceding claims, **characterized in that** the outer lateral surfaces (7) of the part-rings (2', 2") are assigned interlocking means (8), and **in that** the flanks of the rolling portions (4) can be connected to the interlocking means (8) in a material-bonding and/or form-fitting manner.

## Revendications

1. Bandage creux en caoutchouc destiné à être installé sur un organe de support et ayant une enveloppe centrale sur l'organe de support, et deux zones de montage, opposées, ainsi qu'un segment de roulage, le segment de roulage ayant des flancs reliés à l'enveloppe, ainsi qu'un anneau creux entouré par les flancs et par l'enveloppe,
l'enveloppe est divisée en deux anneaux partiels (2', 2") par une fente annulaire, radiale,
les anneaux partiels (2', 2") étant réalisés en un matériau plus ferme que le matériau plus souple, du segment de roulage (4),
les flancs (4', 4") du segment de roulage (4) étant reliés aux anneaux partiels (2', 2") par une liaison par la forme et/ou la matière,
les moyens de denture (8) étant des éléments annulaires (8), de forme circulaire, venant radialement en saillie par rapport à la surface enveloppe (7) des anneaux partiels (2', 2"),
bandage **caractérisé en ce que**
les éléments annulaires ont des passages (9), des dégagements (9) et/ou des bossages.

2. Bandage creux en caoutchouc selon la revendication 1,
**caractérisé en ce que**
le segment de roulage (4) est en caoutchouc.

3. Bandage creux en caoutchouc selon la revendication 1,
**caractérisé en ce que**
les anneaux partiels (2', 2") sont en une matière plastique résistant à la pression.

4. Bandage creux en caoutchouc selon la revendication 1,
**caractérisé en ce que**
les anneaux partiels (2', 2") sont en une tôle mise en forme.

5. Bandage creux en caoutchouc selon l'une des revendications précédentes,
**caractérisé en ce que**
les surfaces enveloppes extérieures (7) des anneaux partiels (2', 2") comportent des dentures (8),
les flancs des segments de roulage (4) sont reliés aux moyens des dentures (8) par une liaison par la matière et/ou par la forme.
